# EUROPÄISCHE PATENTSCHRIFT

(11) **EP 3 426 484 B1**
(45) Veröffentlichungstag und Bekanntmachung des Hinweises auf die Patenterteilung: **11.10.2023**
(21) Anmeldenummer: 17708532.1
(22) Anmeldetag: 06.03.2017
(51) Int. Cl.: B32B 17/06, B32B 17/10, G02B 6/00, F21V 8/00, F21V 33/00, B60Q 3/10, B60Q 1/26, F21S 43/237, F21W 102/40

(54) **BELEUCHTBARE VERBUNDSCHEIBE**
LAMINATED GLAZING WHICH CAN BE ILLUMINATED
VITRAGE FEUILLETÉ POUVANT ETRE ÉCLAIRÉ

(30) Priorität: 09.03.2016 EP 16159469; 09.03.2016 EP 16159456
(43) Veröffentlichungstag der Anmeldung: 16.01.2019
(73) Patentinhaber: SAINT-GOBAIN GLASS FRANCE, 92400 Courbevoie (FR)
(72) Erfinder: KLEIN, Marcel, 52499 Baesweiler (DE); DÖRNER, Dirk, 79312 Emmendingen (DE)
(74) Vertreter: Hermanns, Ellen
(86) Internationale Anmeldenummer: PCT/EP2017/055181
(87) Internationale Veröffentlichungsnummer: WO 2017/153331

(56) Entgegenhaltungen:
- WO-A1-2007/077099
- WO-A1-2008/061789
- WO-A1-2016/000927
- DE-A1-102005 036 869
- DE-U1-202004 011 577
- US-A1- 2013 299 856
- US-A1- 2015 253 486

## Beschreibung

Die Erfindung betrifft eine beleuchtbare Verbundscheibe, insbesondere ein Windschutzscheibe, eine Heckscheibe, eine Seitenscheibe oder eine Dachscheibe eines Fahrzeugs, sowie ein Verfahren zu deren Herstellung und deren Verwendung.

Verbundscheiben bestehen aus mindestens einer Außenscheibe, einer Innenscheibe und einer klebefähigen Zwischenschicht, die die Außenscheibe mit der Innenscheibe flächig verbindet. Typische Zwischenschichten sind dabei Polyvinylbutyralfolien, die neben ihren Klebeeigenschaften eine hohe Zähigkeit und eine hohe akustische Dämpfung aufweisen. Die Zwischenschicht verhindert den Zerfall der Verbundglasscheibe bei einer Beschädigung. Die Verbundscheibe bekommt lediglich Sprünge, bleibt aber formstabil.

Verbundscheiben haben gegenüber Einscheibensicherheitsgläsern deutliche Vorteile: So kann durch eine Verbundscheibe eine hohe akustische Isolation erzielt werden, was beispielsweise zur Abtrennung von Fahrzeuginnenräumen von ihrer äußeren Umgebung besonders vorteilhaft ist. Deshalb werden neben Windschutzscheiben auch zunehmend Seitenscheiben von Kraftfahrzeugen aus Verbundglas gefertigt. Gleichzeitig weist eine Verbundscheibe eine höhere Durchbruchshemmung als ein Einscheibensicherheitsglas auf und ist somit stabiler gegenüber einem Eindringen von Fremdkörpern oder Einbruchsversuchen.

DE 10 2005 036869 A1, WO 2008/061789 A1, WO 2007/077099 A1, US 2015/253486 A1 und US 2013/299856 A1 offenbaren Verbundstrukturen, die durch Glasfasergewebe oder Glasfaservliese flächig beleuchtbar sind.

Der vorliegenden Erfindung liegt die Aufgabe zugrunde, eine verbesserte Verbundscheibe bereitzustellen, die zumindest abschnittsweise beleuchtbar ist. Die Beleuchtung soll einfach und kostengünstig in die Verbundscheibe integrierbar sein.

Die Aufgabe der vorliegenden Erfindung wird erfindungsgemäß durch eine Verbundscheibe gemäß Anspruch 1 gelöst. Bevorzugte Ausführungen gehen aus den Unteransprüchen hervor.

Die erfindungsgemäße Verbundscheibe umfasst mindestens:
- eine Außenscheibe und eine Innenscheibe, welche über eine Zwischenschicht miteinander verbunden sind, und
- mindestens eine lichtstreuende Glasfaser, die geeignet ist Licht durch Streuung über ihre Seitenwand entlang ihrer Erstreckungslänge auszusenden, wobei die Glasfaser abschnittsweise zwischen der Zwischenschicht und der Außenscheibe und zwischen der Zwischenschicht und der Innenscheibe angeordnet ist und die Glasfaser durch mindestens eine Öffnung der Zwischenschicht geführt ist.

Durch die Anordnung der Glasfaser in mindestens einer Öffnung der Zwischenschicht wird die Position der Glasfaser relativ zur Zwischenschicht fixiert, so dass ein Verrutschen der Glasfaser während der Herstellung und Lamination der Verbundscheibe vermieden werden kann.

In einer vorteilhaften Ausgestaltung ist die erfindungsgemäße Verbundscheibe eine Verglasung für Fortbewegungsmittel für den Verkehr auf dem Lande, in der Luft oder zu Wasser, insbesondere in Zügen, Schiffen und Kraftfahrzeugen beispielsweise als Windschutzscheibe, Heckscheibe, Seitenscheibe und/oder Dachscheibe, in Gebäuden, insbesondere im Zugangsbereich, Fensterbereich, Dachbereich oder Fassadenbereich, als Einbauteil in Möbeln und Geräten.

In einer besonders vorteilhaften Ausgestaltung ist die erfindungsgemäße Verbundscheibe eine laminierte Seitenscheibe, die für ein, bevorzugt zu öffnendes, Seitenfenster eines Fahrzeugs vorgesehen ist. Unter einem zu öffnenden Seitenfenster wird ein Seitenfenster verstanden, welches sich durch im Wesentlichen vertikale Verschiebung der Seitenscheibe in die Karosserietür hinein öffnen und wieder schließen lässt.

Die Begriffe Außenscheibe und Innenscheibe dienen lediglich zur Unterscheidung einer ersten Scheibe und einer zweiten Scheibe. Im Falle einer Verwendung der Verbundscheibe als Fahrzeugscheibe oder als Gebäudescheibe ist die Außenscheibe bevorzugt aber nicht notwendigerweise dem Außenraum der Verbundscheibe zugewandt und die Innenscheibe dem Innenraum.

Die erfindungsgemäß eingesetzte Glasfaser ist eine lichtstreuende Glasfaser, die durch Streuung Licht über ihre Seitenwand entlang ihrer Erstreckungslänge aussendet. Derartige Glasfasern bestehen aus mindestens einem Glasfaserkern, der durch eine oder mehrere mantelförmig um den Glasfaserkern angeordneten Schichten umgeben ist. Die Mantelschichten weisen dabei üblicherweise eine Vielzahl von Streuzentren auf, beispielsweise Nanoporen oder Nanopartikel. Geeignete lichtstreuende Glasfasern sind dem Fachmann wohlbekannt. Nur beispielsweise sei hier auf die in der US 2011/0122646 A1 oder US 2015/0131955 A1 genannten Glasfasern verwiesen. Die Dicke der Glasfaser beträgt typischerweise von 5 µm bis 300 µm, bevorzugt von 100 µm bis 250 µm. Es versteht sich, dass die Glasfaser durch eine geeignete Herstellung oder Bearbeitung auch nur über abschnittsweise lichtstreuende Bereiche verfügen kann.

In einer vorteilhaften Ausgestaltung der erfindungsgemäßen Glasfaser beträgt die Erstreckungslänge, über die die Glasfaser ununterbrochen Licht über ihre Seitenwand aussendet, mindestens 5 cm, bevorzugt mindestens 10 cm und besonders bevorzugt mindestens 30 cm.

Unter dem Begriff lichtstreuende Glasfaser sei im Rahmen der vorliegenden Erfindung auch ein Bündel oder Geflecht mehrerer einzelner Glasfasern zu verstehen. In einer vorteilhaften Ausgestaltung weist die erfindungsgemäße Verbundscheibe weniger oder gleich 50 einzelne Glasfasern auf, bevorzugt genau eine Glasfaser, genau zwei Glasfasern, genau drei Glasfasern, genau vier Glasfasern, genau fünf Glasfasern, genau sechs Glasfasern, genau sieben Glasfasern, genau acht Glasfasern, genau neun Glasfasern oder genau zehn Glasfasern. Insbesondere weist die erfindungsgemäße Verbundscheibe kein Glasfaservlies auf. Die ein bis 50 Glasfasern sind bevorzugt unabhängig voneinander ansteuerbar, das heißt unabhängig voneinander beleuchtbar. Die ein bis 50 Glasfasern sind bevorzugt nebeneinander angeordnet. Alternative können sich die Glasfasern überkreuzen, bevorzugt maximal zehn Mal pro Glasfaser.ln einer vorteilhaften Ausgestaltung der erfindungsgemäßen Verbundscheibe ist die Glasfaser in eine Oberfläche der Zwischenschicht eingebettet ist. Dies kann während der Lamination von Außenscheibe, Zwischenschicht und Innenscheibe automatisch erfolgen, da Außenscheibe und Innenscheibe bei den Temperaturen und Drücken der Lamination im Wesentlichen starr sind und die Zwischenschicht weich und nachgiebig.

Öffnung bedeutet im Sinne der vorliegenden Erfindung bevorzugt eine offene Stelle in der Zwischenschicht, die vollständig von der Zwischenschicht umrandet ist. Es versteht sich, dass in einer fertig laminierten erfindungsgemäßen Verbundscheibe die Zwischenschicht den freien Bereich der Öffnung verschließen kann, so dass die Zwischenschicht, die durch die Zwischenschicht geführte Glasfaser unmittelbar berührt. Die Öffnung der Zwischenschicht ist dann durch die Glasfaser gefüllt.

In einer vorteilhaften Ausgestaltung der erfindungsgemäßen Verbundscheibe ist die Öffnung eine Ausnehmung, bevorzugt eine kreisförmige, ellipsenförmige, rechteckige oder dreieckige Ausnehmung, eine Ausstanzung oder in Schlitz, bevorzugt ein Schlitz längs zur Erstreckungsrichtung der Glasfaser (kurz: Längsschlitz) oder ein Schlitz quer zur Erstreckungsrichtung der Glasfaser (kurz: Querschlitz).

In einer vorteilhaften Ausgestaltung der erfindungsgemäßen Verbundscheibe beträgt die Breite b der Öffnung quer zur Erstreckungsrichtung der Glasfaser von einem einfachen Durchmesser d der Glasfaser bis zu einem 40-fachen Durchmesser d.

In einer vorteilhaften Ausgestaltung der erfindungsgemäßen Verbundscheibe beträgt die Breite b der Öffnung quer zur Erstreckungsrichtung der Glasfaser von 0,5 mm bis 10 mm, bevorzugt von 1 mm bis 5 mm.

In einer vorteilhaften Ausgestaltung der erfindungsgemäßen Verbundscheibe weist die Zwischenschicht mindestens 2, bevorzugt 3 bis 100, Öffnungen auf, durch die die Glasfaser geführt ist. Durch eine Vielzahl von Öffnungen wird die Glasfaser sicher fixiert und es können komplexe Linienführungen der Glasfaser erzielt werden.

In einer vorteilhaften Ausgestaltung der erfindungsgemäßen Verbundscheibe beträgt der Abstand benachbarter Öffnungen von 0,5 cm bis 50 cm, bevorzugt von 0,5 cm bis 20 cm, besonders bevorzugt von 0,5 cm bis 5 cm und insbesondere von 1 cm bis 3 cm. Durch einen derartigen Abstand benachbarter Öffnungen wird die Glasfaser sicher fixiert und es können komplexe Linienführungen der Glasfaser erzielt werden.

Zur weiteren vereinfachten Herstellung der Verbundscheibe, kann die Glasfaser vor der Lamination unter Einwirkung von Druck und Temperatur in einer Oberfläche der Zwischenschicht fixiert werden. Dies hat den besonderen Vorteil, dass die Glasfaser während der Herstellung der Verbundscheibe in ihrer Position relativ zur Zwischenschicht zusätzlich fixiert ist und ein Verrutschen vermieden wird. Die Einwirkung von Druck und Temperatur kann bevorzugt durch ein Heizelement, bevorzugt einen Lötkolben, eine beheizte Anpresswalze, eine Wärmeplatte, insbesondere ein Bügeleisen, oder einen Heißluftstrom in Kombination mit einem Anpressmittel erzeugt werden.

In einer weiteren vorteilhaften Ausgestaltung einer erfindungsgemäßen Verbundscheibe ist die Glasfaser durch mindestens ein Befestigungsmittel mit der Zwischenschicht, der Außenscheibe und/oder der Innenscheibe verbunden. Dies hat den besonderen Vorteil, dass die Glasfaser während der Herstellung der Verbundscheibe in ihrer Position relativ zur Zwischenschicht zusätzlich fixiert ist und ein Verrutschen vermieden wird. Die Befestigungsmittel sind bevorzugt transparent, so dass die Durchsicht durch die Verbundscheibe nicht oder nicht wesentlich beeinträchtigt wird.

In einer weiteren besonders vorteilhaften Ausgestaltung einer erfindungsgemäßen Verbundscheibe ist das Befestigungsmittel ein Klebemittel, bevorzugt ein bei Auftragung flüssiger Klebstoff, ein einseitig klebendes Klebeband (kurz: einseitiges Klebeband) oder ein doppelseitig klebendes Klebeband (kurz: doppelseitiges Klebeband). Das einseitige Klebeband beziehungsweise das doppelseitige Klebeband bestehen aus einen Trägerfilm, bevorzugt einem Trägerfilm aus Kunststoff, der einseitig beziehungsweise doppelseitig einen Klebstoff aufweist.

Besonders vorteilhafte Klebstoffe sind Acrylatklebstoffe, Methylmethacrylatklebstoffe, Cyanacrylatklebstoffe, Polyepoxide, Silikonklebstoffe und/oder Silanvernetzende-Polymerklebstoffe, Gemische und/oder Copolymere davon.

In einer alternativen vorteilhaften Ausgestaltung ist das Befestigungsmittel eine monofile Schnur oder eine geflochtene Schnur, bevorzugt eine transparente Schnur, besonders bevorzugt eine Kunststoffschnur und insbesondere eine Schnur aus Polyamid (beispielsweise Nylon), Polyethylen (beispielsweise Dyneema oder Spectra) oder Polyaramid (beispielsweise Kevlar). Derartige Schnüre haben typische Durchmesser von 0,01 mm bis 2 mm, bevorzugt von 0,02 mm bis 0,1 mm.

Die Außenscheibe und/oder die Innenscheibe enthalten bevorzugt Glas, insbesondere Kalk-Natron-Glas, oder Kunststoffe, vorzugsweise starre Kunststoffe, insbesondere Polycarbonat oder Polymethylmethacrylat. Die Dicke der Scheiben kann breit variieren und so hervorragend den Erfordernissen im Einzelfall angepasst werden. Vorzugsweise betragen die Dicken der Außenscheibe und der Innenscheibe von 0,5 mm bis 10 mm und bevorzugt von 1 mm bis 5 mm, ganz besonders bevorzugt von 1,4 mm bis 3 mm.

Die Außenscheibe, die Innenscheibe oder die Zwischenschicht können klar und farblos, aber auch getönt, getrübt oder gefärbt sein. Die Außenscheibe und die Innenscheibe können aus nicht vorgespanntem, teilvorgespanntem oder vorgespanntem Glas bestehen. Die Außenscheibe und/oder die Innenscheibe können auf einer ihrer Seiten einen Abdeckdruck, bevorzugt einen Schwarzdruck aufweisen, der beispielsweise die Durchsicht auf eine Einklebung der Scheibe in eine Einhausung oder Fahrzeugkarossiere oder andere in oder an der Scheibe angeordnete Elemente verdeckt. Der Abdeckdruck kann opak und vollflächig ausgebildet sein. Alternativ kann der Abdeckdruck auch semitransparent, beispielsweise als Punktraster, Streifen raster oder kariertes Raster ausgebildet sein. Alternativ kann der Abdeckdruck auch einen Gradienten aufweisen, beispielsweise von einer opaken Bedeckung zu einer semitransparenten Bedeckung.

In einer vorteilhaften Ausgestaltungsform weist die erfindungsgemäße Verbundscheibe zumindest abschnittsweise auf der Außenscheibe oder auf der Innenscheibe einen Abdeckdruck und insbesondere einen Schwarzdruck auf, wobei die Glasfaser zumindest abschnittweise im Bereich des Abdeckdrucks angeordnet ist. Bei einem opaken Abdeckdruck hat dies den besonderen Vorteil, dass die Glasfaser und eventuelle Befestigungsmittel in der Durchsicht nicht zu erkennen sind und gleichzeitig die Beleuchtung durch die Glasfaser nur auf einer Oberfläche der Scheiben, das heißt auf der außenseitigen Oberfläche der Außenscheibe oder der innenseitigen Oberfläche der Innenscheibe, zu erkennen ist.

Die Zwischenschicht wird durch mindestens eine thermoplastische Verbindungsfolie gebildet. Die thermoplastische Verbindungsfolie enthält zumindest ein thermoplastisches Polymer, bevorzugt Ethylenvinylacetat (EVA), Polyvinylbutyral (PVB) oder Polyurethan (PU) oder Gemische oder Copolymere oder Derivate davon. Die Dicke der Zwischenschicht und insbesondere der thermoplastischen Verbindungsfolie beträgt bevorzugt von 0,2 mm bis 2 mm, besonders bevorzugt von 0,3 mm bis 1 mm, beispielsweise 0,38 mm oder 0,76 mm.

In einer weiteren vorteilhaften Ausgestaltung weist die erfindungsgemäße Verbundscheibe Heizmittel zur elektrischen Beheizung der Verbundscheibe auf. Bevorzugte Heizmittel sind dabei elektrisch leitfähige Drähte und/oder eine oder mehrere elektrisch beheizbare, transparente, elektrisch leitfähige Schicht.

Die erfindungsgemäße Verbundscheibe kann neben der durch die Heizmittel bewirkten Heizfunktion weitere Funktionalitäten aufweisen. In einer vorteilhaften Ausgestaltung weist die Verbundscheibe eine reflektierende Beschichtung für den Infrarotbereich auf. Eine solche Beschichtung kann auf eine Oberfläche der Außenscheibe oder auf eine Oberfläche der Innenscheibe aufgebracht sein, bevorzugt auf einer zur Zwischenschicht hingewandten Oberfläche, um die Beschichtung vor Korrosion und mechanischer Einwirkung zu schützen. Alternativ kann die Beschichtung in Form einer beschichteten thermoplastischen Folie, beispielsweise aus Polyethylenterephthalat (PET), in den Verbund eingebracht sein. In diesem Fall ist die beschichtete Folie bevorzugt zwischen einer ersten und einer zweiten thermoplastischen Verbindungsfolie angeordnet. IR-reflektierende Beschichtungen weisen typischerweise zumindest eine elektrisch leitfähige Schicht auf. Die Beschichtung kann zusätzlich dielektrische Schichten aufweisen, die beispielsweise zur Regulierung des Schichtwiderstands, zum Korrosionsschutz oder zur Verminderung der Reflexion dienen. Die leitfähige Schicht enthält bevorzugt Silber oder ein elektrisch leitfähiges Oxid (transparent conductive oxide, TCO) wie Indium-Zinn-Oxid (indium tin oxide, ITO). Die leitfähige Schicht weist bevorzugt eine Dicke von 10 nm bis 200 nm auf. Zur Verbesserung der Leitfähigkeit bei gleichzeitig hoher Transparenz kann die Beschichtung mehrere elektrisch leitfähige Schichten aufweisen, welche durch zumindest eine dielektrische Schicht voneinander getrennt sind. Die leitfähige Beschichtung kann beispielsweise zwei, drei oder vier elektrisch leitfähige Schichten enthalten. Typische dielektrische Schichten enthalten Oxide oder Nitride, beispielsweise Siliziumnitrid, Siliziumoxid, Aluminiumnitrid, Aluminiumoxid, Zinkoxid oder Titanoxid. Es versteht sich, dass diese elektrisch leitfähigen, transparenten Beschichtungen auch zur elektrischen Beheizung der Scheibe dienen können. Die Beschichtung weist bevorzugt eine kleinere Fläche als die Verbundscheibe auf, so dass ein umlaufender Randbereich mit einer Breite von bevorzugt 0,5 mm bis 15 mm nicht mit der Beschichtung versehen ist. Die leitfähige Beschichtung ist dadurch innerhalb der Zwischenschicht vor Kontakt mit der umgebenden Atmosphäre geschützt, was im Hinblick auf die Vermeidung von Korrosion vorteilhaft ist. Die Verbundscheibe kann auch weitere unbeschichtete Bereiche enthalten, beispielsweise Datentransmissionsfenster oder Kommunikationsfenster.

Ein weiterer Aspekt der Erfindung ist eine Verbundscheibenanordnung, mindestens umfassend:
- eine erfindungsgemäße Verbundscheibe und
- ein Leuchtmittel zur Einkopplung von Licht in die Glasfaser.

Das Leuchtmittel ist bevorzugt an einer Seitenkante der Verbundscheibe angeordnet. Im Falle einer beweglichen Verbundscheibe, wie einer Seitenscheibe, die geöffnet werden kann, ist das Leuchtmittel bevorzugt mit der Verbundscheibe verbunden und ebenfalls beweglich angeordnet. Es versteht sich, dass das Leuchtmittel auch unabhängig von der Verbundscheibe installiert sein kann und über eine bevorzugt nicht-lichtstreuende Glasfaser mit der erfindungsgemäßen lichtstreuenden Glasfaser verbunden sein kann.

Vorteilhafte Leuchtmittel sind beispielsweise Laserdioden, Leuchtdioden (LED) oder Glühbirnen, wobei die Erfindung jegliche Art von Lichtquelle, die für eine jeweilige Verwendung geeignet ist, umfasst. Die erfindungsgemäßen Leuchtmittel beinhalten auch Linsensysteme, Spiegelsysteme, Reflektorsysteme oder andere Lichtleiter, die zur Einkopplung des Lichts in die erfindungsgemäße Glasfaser dienen können.

Die Leuchtmittel können farbig oder weiß sein. Die Leuchtmittel können auch im ultravioletten Bereich Licht abgeben, sofern die Glasfaser oder ihre Umgebung das ultraviolette Licht in sichtbares Licht wandeln können. Bevorzugte Lichtfarben sind rot (wegen der ausgeprägten Signalwirkung), grün (wegen der hohen Empfindlichkeit des menschlichen Auges für das grüne Farbspektrum) und blau (wegen seiner besonders ästhetischen und wenig blendenden Wirkung).

Es versteht sich, dass eine Verbundscheibe eine oder mehrere Glasfasern aufweisen kann. Dabei sind bevorzugt alle Glasfaser gemeinsam oder jede Glasfaser einzeln, die mit einem Leuchtmittel gekoppelt. Die Glasfaser oder die Glasfasern können in jeder beliebigen, technisch möglichen Form in der Verbundscheibe angeordnet sein, beispielsweise im Randbereich, in der Mitte, geradlinig, geschwungen oder als Schriftzug oder Symbol.

Ein weiterer Aspekt der Erfindung ist ein Verfahren zur Herstellung einer erfindungsgemäßen Verbundscheibe, mindestens umfassend:
(a) Bereitstellen einer Glasfaser, einer Zwischenschicht, einer Außenscheibe mit einer innenseitigen Oberfläche II und einer Innenscheibe mit einer außenseitigen Oberfläche III,
(b) Einbringen von mindestens einer Öffnung in die Zwischenschicht und Durchführen der Glasfaser durch die Öffnung,
(c) Anordnen der Zwischenschicht zwischen der Außenscheibe und der Innenscheibe,
(d) Verbinden der innenseitigen Oberfläche II der Außenscheibe mit der außenseitigen Oberfläche III der Innenscheibe über die Zwischenschicht durch Lamination.

Die Lamination erfolgt mit üblichen, dem Fachmann an sich bekannten Methoden, beispielsweise Autoklavverfahren, Vakuumsackverfahren, Vakuumringverfahren, Kalanderverfahren, Vakuumlaminatoren oder Kombinationen davon. Die Verbindung von Außenscheibe und Innenscheibe dabei erfolgt üblicherweise unter Einwirkung von Hitze, Vakuum und/oder Druck.

In einer vorteilhaften Weiterbildung des erfindungsgemäßen Verfahrens wird im Schritt (b) die Öffnung eingestanzt oder ausgestanzt, bevorzugt mittels einer Nadel, einem Locheisen oder einem geeignet geformten Stanzwerkzeug.

In einer vorteilhaften Weiterbildung des erfindungsgemäßen Verfahrens wird im Schritt (b) die Öffnung durch Einschneiden der Zwischenschicht, bevorzugt mit einem Skalpell, einer Klinge, einem Messer oder einem Laser, hergestellt.

Ein weiterer Aspekt der Erfindung umfasst die Verwendung der erfindungsgemäßen Verbundscheibe in Fortbewegungsmitteln für den Verkehr auf dem Lande, in der Luft oder zu Wasser, insbesondere in Zügen, Schiffen und Kraftfahrzeugen, beispielsweise als Windschutzscheibe, Heckscheibe, Seitenscheibe und/oder Dachscheibe, in Gebäuden, insbesondere im Zugangsbereich, Fensterbereich, Dachbereich oder Fassadenbereich, als Einbauteil in Möbeln und Geräten.

Die erfindungsgemäße Verbundscheibe ist besonders bevorzugt eine abschnittsweise rahmenlose Verglasung, wobei die erfindungsgemäße lichtstreuende Glasfaser in der Nähe der rahmenlosen Seitenkanten angeordnet ist. Gleichwohl kann die lichtstreuende Glasfaser auch an einer inneren Seitenkante, beispielsweise im Bereich eines aus der Verglasung herausgeschnittenen Ausschnitts wie einer Glasluke in einer Dachscheibe angeordnet sein.

Die erfindungsgemäße Verbundscheibe ist bevorzugt als feststehende Verglasung ausgebildet, das heißt die Verglasung ist relativ zu ihrer Umgebung feststehend angeordnet und beispielsweise durch einen abschnittsweise Befestigung fixiert, beispielsweise als Windschutzscheibe in einem Fahrzeug oder als Trennscheibe in einem Gebäude oder in einem Möbelstück.

Die erfindungsgemäße Verbundscheibe ist alternativ als bewegliche Verglasung ausgebildet, das heißt die Verglasung ist relativ zu ihrer Umgebung beweglich angeordnet, beispielsweise als in einer Tür beweglich angeordnete Verglasung wie eine Seitenscheibe in einer Fahrzeugtür.

Ein weiterer Aspekt umfasst die Verwendung eines Leuchtmittels in einer Verbundscheibenanordnung zur Kennzeichnung einer elektrischen Funktion, bevorzugt einer Heizfunktion, einer Bewegung der erfindungsgemäßem Verbundscheibe, bevorzugt eines sich öffnenden oder schließenden Seitenfensters und/oder als Warnfunktion, bevorzugt bei einer rahmenlosen Seitenscheibe in einer geöffneten Fahrzeugtür. Eine bevorzugte Verwendung umfasst die Verwendung der Verbundscheibenordnung für eine Coming-Home-Funktion und/oder eine Leaving-Home-Funktion. Es versteht sich, dass die elektrische Funktion, die das Leuchtmittel kennzeichnet, nicht lediglich der Betrieb des Leuchtmittels ist, sondern eine andere.

Als Coming-Home-Funktion (engl. ,heim kommen') wird üblicherweise eine Funktion bezeichnet, bei der nach Verlassen eines Fahrzeugs die Fahrzeugbeleuchtung noch eine gewisse Zeit nachleuchtet und sich dann automatisch abschaltet. Dies hat den Zweck, den Weg vom Parkplatz zur Haustür auszuleuchten, also das Heimkommen zu erleichtern, sowie das Fahrzeug während des Aussteigens besser sichtbar bleiben zu lassen.

Als Leaving-Home-Funktion (engl. ,aus dem Haus gehen') wird üblicherweise eine Funktion bezeichnet, bei der sich, beispielsweise nach Öffnen des Fahrzeuges per Fernbedienung die Fahrzeugbeleuchtung einschaltet, um den Weg von der Haustür zum Auto auszuleuchten.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Figur 1A: eine Draufsicht auf eine Ausgestaltung der erfindungsgemäßen Verbundscheibenanordnung,
- Figur 1B: eine Querschnittsdarstellung entlang der Schnittlinie A-A' durch die Verbundscheibe aus Figur 1A,
- Figur 1C: eine vergrößerte Darstellung der Zwischenschicht mit Glasfaser des Ausschnitts Z aus Figur 1A,
- Figur 1D: einen Querschnitt entlang der Schnittlinie B-B' des Ausschnitts Z aus Figur 1C,
- Figur 1E: einen Querschnitt entlang der Schnittlinie B-B' des Ausschnitts Z aus Figur 1C,
- Figur 1F: einen Querschnitt entlang der Schnittlinie B-B' des Ausschnitts Z aus Figur 1C nach der Lamination,
- Figur 2A: eine Draufsicht auf eine alternative Ausgestaltung der erfindungsgemäßen Verbundscheibenanordnung,
- Figur 2B: eine Querschnittsdarstellung entlang der Schnittlinie A-A' durch die Verbundscheibe aus Figur 2A,
- Figur 3A: eine Draufsicht auf eine alternative Ausgestaltung der erfindungsgemäßen Verbundscheibenanordnung,
- Figur 3B: eine Querschnittsdarstellung entlang der Schnittlinie A-A' durch die Verbundscheibe aus Figur 3A,
- Figur 3C: eine vergrößerte Darstellung der Zwischenschicht mit Glasfaser des Ausschnitts Z aus Figur 3A,
- Figur 4: ein Flussdiagramm einer Ausführungsform des erfindungsgemäßen Verfahrens.

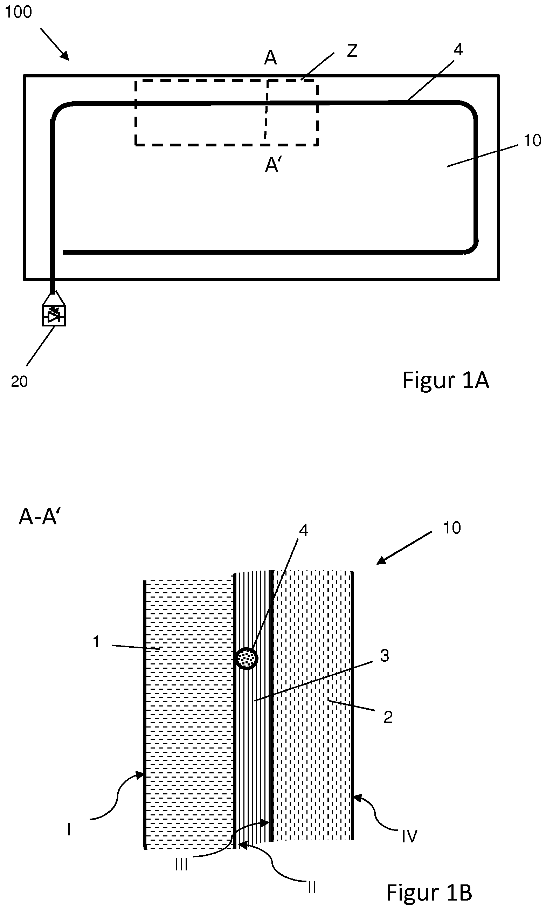

Figur 1A zeigt eine Draufsicht auf eine erfindungsgemäße Verbundscheibenanordnung 100, die eine erfindungsgemäße Verbundscheibe 10 und ein Leuchtmittel 20 umfasst. Figur 1B zeigt eine Querschnittsdarstellung entlang der Schnittlinie A-A' durch die Verbundscheibe 10 aus Figur 1A. Die Verbundscheibe 10 ist in diesem Beispiel als Dachscheibe eines Personenkraftwagens ausgestaltet.

Die erfindungsgemäße Verbundscheibe 10 enthält eine Außenscheibe 1 mit einer innenseitigen Oberfläche II, eine Innenscheibe 2 mit einer außenseitigen Oberfläche III und eine thermoplastische Zwischenschicht 3, welche die innenseitige Oberfläche II der Außenscheibe 1 mit der außenseitigen Oberfläche III der Innenscheibe 2 über die Scheibenfläche miteinander verbindet. Die Außenscheibe 1 und die Innenscheibe 2 bestehen beispielsweise aus Kalk-Natron-Glas und weisen beispielsweise eine Dicke von jeweils 1,5 mm auf. Die thermoplastische Zwischenschicht 3 ist beispielsweise eine dreilagige Folie aus Polyvinylbutyral (PVB) mit einer Gesamtdicke von 0,86 mm. Es versteht sich, dass auch andere Glasscheiben oder Polymerscheiben als Außenscheibe und Innenscheibe verwendet werden können. Des Weiteren kann die Dicke der Außenscheibe 1 und Innenscheibe 2 an die jeweilige Verwendung angepasst sein.

Die Glasfaser 4 ist erfindungsgemäß abschnittsweise zwischen der innenseitigen Oberfläche II der Außenscheibe 1 und der Zwischenschicht 3 und abschnittsweise zwischen der Zwischenschicht 3 und der außenseitigen Oberfläche III der Innenscheibe 2 angeordnet. In dem in Figur 1B dargestellten Schnitt ist die Glasfaser 4 zwischen der innenseitigen Oberfläche II der Außenscheibe 1 und Zwischenschicht 3 angeordnet.

Die Glasfaser 4 hat einen Durchmesser d von beispielsweise 200 µm und ist dazu geeignet über ihre Seitenwand entlang ihrer Erstreckungslänge Licht auszusenden. Das Licht wird dabei über eine Stirnfläche der Glasfaser 4 in die Glasfaser 4 eingekoppelt. Dazu ist an einem Ende der Glasfaser 4 ein Leuchtmittel 20 angeordnet. Das Leuchtmittel 20 besteht beispielsweise aus einer Laserdiode, die beispielsweise über einen Reflektor, Licht in die Glasfaser 4 einkoppeln kann. Bei Anlegen einer Spannung an die Laserdiode wird dann Licht in die Glasfaser 4 eingekoppelt. Die Glasfaser 4 streut dann das Licht an ihrer Oberfläche entlang ihrer gesamten Erstreckungslänge, so dass die Glasfaser 4 über ihre gesamte Erstreckungslänge leuchtet.

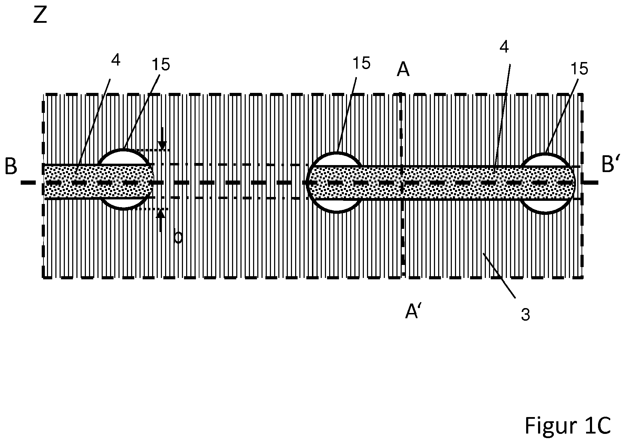

Figur 1C zeigt eine vergrößerte Darstellung der Zwischenschicht 3 mit Glasfaser 4 des Ausschnitts Z aus Figur 1A in einer Draufsicht auf die der innenseitigen Oberfläche II der Außenscheibe 1 zugewandten Seite der Zwischenschicht 3. Die Zwischenschicht 3 weist in diesem Ausgestaltungsbeispiel im Ausschnitt Z drei kreisförmige Öffnungen 15 auf, die beispielsweise durch Ausstanzen in die Zwischenschicht 3 eingebracht wurden. Die Glasfaser 4 ist wechselweise von oben nach unten und von unten nach oben durch die Öffnungen 15 der Zwischenschicht 3 geführt. Es versteht sich, dass die Zwischenschicht 3 auch außerhalb des hier dargestellten Ausschnitts Z weitere Öffnungen 15 aufweist, durch die die Glasfaser 4 geführt ist. Eine derart erfindungsgemäße Anordnung hat den besonderen Vorteil, dass die Glasfaser 4 fest mit der Zwischenschicht 3 verbunden ist und bei der Herstellung der erfindungsgemäßen Verbundscheibe 10 in ihrer Position bezüglich der Zwischenschicht 3 nicht verrutschen kann.

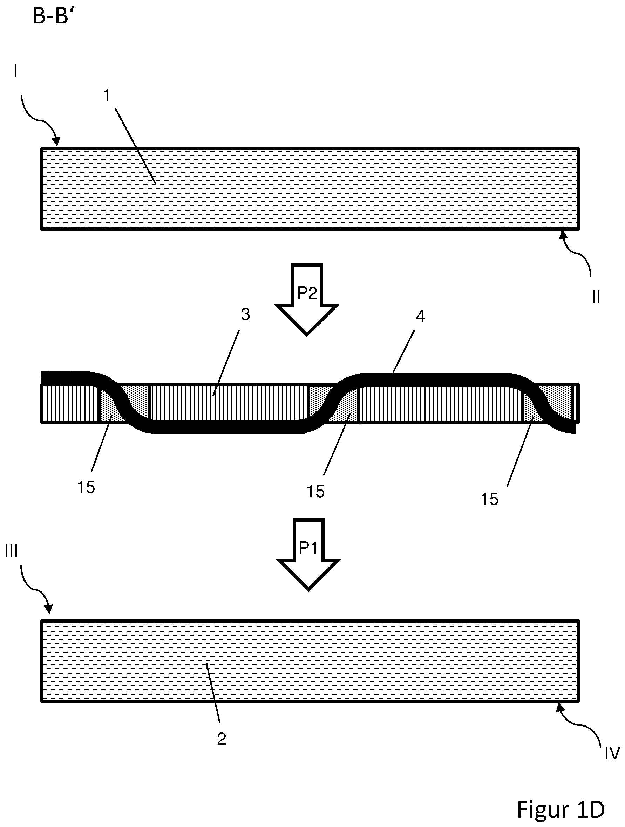

Figur 1D zeigt den Ausschnitt Z mit den Elementen der erfindungsgemäßen Verbundscheibe 10 vor der Lamination. Diese umfassen die Außenscheibe 1 mit einer innenseitigen Oberfläche II und die Innenscheibe 2 mit einer außenseitigen Oberfläche III sowie eine Glasfaser 4 und eine thermoplastische Zwischenschicht 3. Zur Herstellung werden beispielsweise zuerst mehrere Öffnungen 15 in die Zwischenschicht 3 eingebracht. Im dargestellten Ausschnitt Z werden beispielsweise drei Öffnungen 15 in die Zwischenschicht 3 eingebracht. Für die gesamte Verbundscheibe 10 aus Figur 1A werden beispielsweise 20 Öffnungen 15 in die Zwischenschicht eingebracht. Es versteht sich, dass die Anzahl der Öffnungen 15 beliebig an die jeweiligen technischen Gegebenheiten, wie beispielsweise Steifigkeit der Glasfaser 4, Krümmung des gewünschten Verlaufs der Glasfaser 4 in der Verbundscheibe 10, etc., angepasst werden können.

Die Öffnungen 15 sind hier beispielsweise kreisförmig und werden beispielsweise durch ein Locheisen in die Zwischenschicht 3 eingestanzt. Es versteht sich, dass die Öffnungen 15 auch schlitzförmig sein können, beispielsweise in Form von Längsschnitten längs zur Erstreckungsrichtung der Glasfaser 4 oder in Form von Querschnitten quer zur Erstreckungsrichtung der Glasfaser 4. Es versteht sich, dass die Art der Öffnung 15 auch variieren kann und verschiedene Öffnungsarten kombiniert werden können.

In einem weiteren Verfahrensschritt wird die Glasfaser 4 durch die Öffnungen 15 der Zwischenschicht 3 hindurchgeführt. Dabei wird die Glasfaser 4 abschnittsweise auf einer Seite der Zwischenschicht 3 angeordnet und nach dem Durchführen durch eine der Öffnungen 15 auf der anderen Seite der Zwischenschicht 3 angeordnet.

Es versteht sich, dass das Einbringen der Öffnungen 15 und das Durchführen der Glasfaser 4 durch die Zwischenschicht 3 auch alternierend erfolgen kann. Das bedeutet, dass zunächst eine Öffnung 15 in die Zwischenschicht 3 eingebracht wird und anschließend die Glasfaser 4 durch die Öffnung 15 geführt wird. Anschließend wird eine weitere Öffnung 15 in die Zwischenschicht 3 eingebracht und die Glasfaser 4 durch diese weitere Öffnung 15 durchgeführt, usw.

In einem weiteren Verfahrensschritt wird die Zwischenschicht 3 mitsamt der eingefädelten Glasfaser 4 zwischen der Außenscheibe 1 und der Innenscheibe 2 angeordnet. Beispielsweise in dem die Zwischenschicht 3 mit der Glasfaser 4 auf der außenseitigen Oberfläche III der Innenscheibe 2 angeordnet wird (Pfeil P1) und anschließend die Außenscheibe 1 mit ihrer innenseitigen Oberfläche II auf der Zwischenschicht 3 angeordnet wird (Pfeil P2). Es versteht sich, dass die Stapelreihenfolge auch vertauscht werden kann.

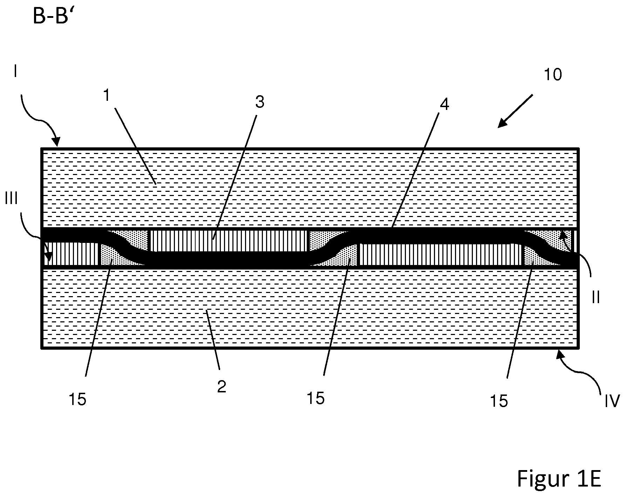

Figur 1E zeigt einen Querschnitt entlang der Schnittlinie B-B' des Ausschnitts Z der derart hergestellten Stapelfolge vor der Lamination. Da die polymere Zwischenschicht 3 nachgiebig und die gläserne Innenscheibe 2 und die gläserne Außenscheibe 1 weitestgehend starr sind, dringt die Glasfaser 4 in einen Bereich der jeweiligen benachbarten Oberfläche der Zwischenschicht 3 ein.

In einem weiteren Verfahrensschritt werden Außenscheibe 1, Zwischenschicht 3 und Innenscheibe 2 unter Einwirkung von Druck und Temperatur durch Lamination verbunden.

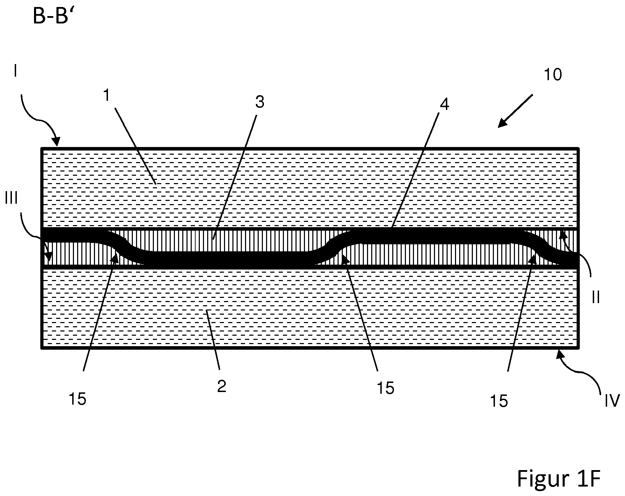

Figur 1F zeigt einen Querschnitt entlang der Schnittlinie B-B' des Ausschnitts Z der erfindungsgemäßen Verbundscheibe 10 nach der Lamination. Durch die Einwirkung von Druck und Temperatur während der Lamination wird die thermoplastische Zwischenschicht 3 erweicht, so dass die Glasfaser 4 in die Oberflächen der Zwischenschicht 3 eingebettet wird. Gleichzeitig werden die Öffnungen 15 mit dem Material der Zwischenschicht 3 gefüllt, so dass die Öffnungen 15 bei Durchsicht durch die erfindungsgemäße Verbundscheibe 10 nicht mehr oder nicht wesentlich sichtbar sind. Die Öffnung 15 reduziert sich daher im optimalen Fall auf den Raum, den die Glasfaser 4 beim Durchführen von einer Seite der Zwischenschicht 3 auf die gegenüberliegende Seite der Zwischenschicht 3 einnimmt.

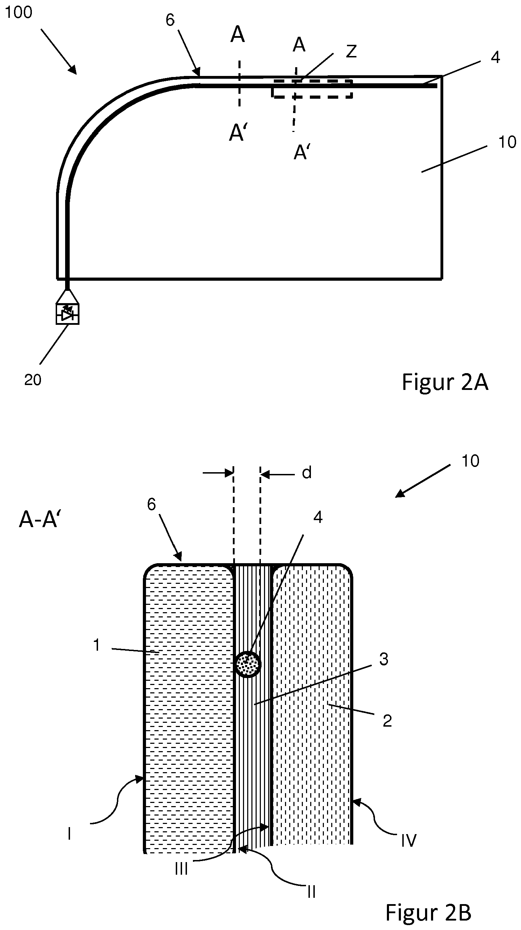

Figur 2A zeigt eine Draufsicht auf eine erfindungsgemäße Verbundscheibenanordnung 100, die eine erfindungsgemäße Verbundscheibe 10 und ein Leuchtmittel 20 umfasst. Figur 2B zeigt eine Querschnittsdarstellung entlang der Schnittlinie A-A' durch die Verbundscheibe 10 aus Figur 2A. Die Verbundscheibe 10 ist in diesem Beispiel als Seitenscheibe für ein Seitenfenster eines Personenkraftwagens ausgestaltet.

Die erfindungsgemäße Verbundscheibe 10 enthält eine Außenscheibe 1 mit einer innenseitigen Oberfläche II, eine Innenscheibe 2 mit einer außenseitigen Oberfläche III und eine thermoplastische Zwischenschicht 3, welche die innenseitige Oberfläche II der Außenscheibe 1 mit der außenseitigen Oberfläche III der Innenscheibe 2 über die Scheibenfläche miteinander verbindet. Die Außenscheibe 1 und die Innenscheibe 2 bestehen beispielsweise aus Kalk-Natron-Glas und weisen beispielsweise eine Dicke von jeweils 2,1 mm auf. Die thermoplastische Zwischenschicht 3 ist beispielsweise eine Folie aus Polyvinylbutyral (PVB) mit einer Dicke von 0,76 mm. Es versteht sich, dass auch andere Glasscheiben oder Polymerscheiben als Außenscheibe und Innenscheibe verwendet werden können. Des Weiteren kann die Dicke der Außenscheibe 1 und Innenscheibe 2 an die jeweilige Verwendung angepasst sein.

Auch hier wird die Glasfaser 4 durch Öffnungen 15 der Zwischenschicht hindurchgeführt. Eine beispielhafte detaillierte Darstellung des Ausschnitts Z und des Herstellungsverfahrens ist in den Figuren 1C bis 1F und der dazugehörigen Beschreibung dargestellt.

Die lichtstreuende Glasfaser 4 hat einen Durchmesser d von beispielsweise 200 µm und ist dazu geeignet über ihre Seitenwand entlang ihrer Erstreckungslänge Licht auszusenden. Das Licht wird dabei über eine Stirnfläche der Glasfaser 4 in die Glasfaser 4 eingekoppelt. Dazu ist an einem Ende der Glasfaser 4 ein Leuchtmittel 20 angeordnet. Das Leuchtmittel 20 besteht beispielsweise aus einer Laserdiode, die, beispielsweise über einen Reflektor, Licht in die Glasfaser 4 einkoppeln kann. Bei Anlegen einer Spannung an die Laserdiode wird Licht in die Glasfaser 4 eingekoppelt. Die Glasfaser 4 streut das Licht an ihrer Oberfläche entlang ihrer gesamten Erstreckungslänge, so dass die Glasfaser 4 über ihre gesamte Erstreckungslänge leuchtet.

Die Verbundscheibe 10 ist hier beispielsweise eine Seitenscheibe einer Fahrzeugtür eines Personenkraftfahrzeugs und die Glasfaser 4 in der Nähe der vorderen und oberen Seitenkante 6 der Verbundscheibe 10 angeordnet. Die Einfassung der Seitenscheibe in der Fahrzeugtür ist beispielsweise rahmenlos, so dass die Seitenscheibe nur an ihrer unteren Seite geführt und in die Fahrzeugtür eingelassen ist. Das Leuchtmittel 20 ist hier beispielsweise eine leistungsstarke Leuchtdiode.

Die mit dieser Verbundscheibe 10 hergestellte Verbundscheibenanordnung 100 ist beispielsweise derart konfiguriert, dass das Leuchtmittel 20 beim Öffnen der Fahrzeugtür aktiviert wird und die Glasfaser 4 beleuchtet. Dies hat den besonderen Vorteil, dass die Fahrzeugtür im geöffneten Zustand beleuchtet ist und für andere Verkehrsteilnehmer besonders gut erkennbar ist. Die Sichtbarkeit der derart beleuchteten Verbundscheibe 10 ist bei Dunkelheit besonders erhöht - insbesondere da die Verbundscheibe 10 in diesem Beispiel rahmenlos ist und nur an ihrer unteren Seitenkante in der Fahrzeugtür befestigt ist. Die durch die Glasfaser 4 beleuchtete Seitenkante der Verbundscheibe 10 ist somit frei und ungehindert sichtbar.

Das Leuchtmittel 20 kann dabei einfarbig sein oder verschiedene Zustände durch verschiedene Farben kennzeichnen. So ist die Warnfunktion für ein rotes Leuchtmittel besonders hoch, da eine rote Farbe üblicherweise mit einer Gefahr assoziiert wird. Grüne Leuchtmittel sind bei Dunkelheit besonders gut zu erkennen, da das menschliche Auge eine besonders große Empfindlichkeit für das grüne Farbspektrum aufweist.

In einer weiteren beispielshaften Ausgestaltung weist das Leuchtmittel 20 beispielsweise eine rote Leuchtdiode und eine blaue Leuchtdiode auf. Die Verbundscheibenanordnung 100 ist dabei beispielsweise mit der Fahrzeugelektronik derart verbunden, dass bei einem Öffnen der Verbundscheibe 10 über elektrische Fensterheber, die Glasfaser 4 mit blauem Licht beleuchtet wird und beim Schließen der Verbundscheibe 10 die Glasfaser 4 mit rotem Licht beleuchtet wird. Dies hat den besonderen Vorteil, dass dadurch die Richtung der Bewegung der Verbundscheibe 10 relativ zum Türrahmen sichtbar wird und Personen die Gefahr eines Einklemmens von Körperteilen oder Gegenständen in dem sich schließenden Fenster schnell erkennen können. Es versteht sich, dass auch andere Farben oder weißes Licht für die Beleuchtung der Glasfaser 4 verwendet werden können. Des Weiteren können auch andere Funktionen über die Beleuchtung der Verbundscheibe 10 angezeigt werden oder besonders ästhetische Beleuchtungen realisiert werden.

Erfindungsgemäße Verbundscheiben 10 können optional eine zusätzliche elektrische Funktion und beispielsweise eine elektrische Heizfunktion aufweisen. Dabei können beispielsweise hier nicht dargestellte Heizmittel, wie Heizdrähte oder Heizschichten im Bereich zwischen Außenscheibe 1 und Innenscheibe 2 angeordnet sein. Derartige Heizdrähte bestehen beispielsweise aus Kupfer oder Wolfram und weisen eine Dicke von beispielsweise 30 µm auf. Als Heizschichten sind beispielsweise transparente, elektrisch leitfähige Beschichtungen bekannt, wie sie obenstehend beispielsweise beschrieben sind. Heizdrähte und Heizschichten können beispielsweise durch Stromsammelschienen, beispielsweise Streifen einer Kupferfolie mit einer Dicke von beispielsweise 100 µm und einer Breite von beispielsweise 7 mm, gebildet werden. Wird an die Stromsammelschienen eine Spannung angelegt, so fließt ein Strom durch die Heizdrähte oder die Heizschicht, wodurch die Heizwirkung entsteht. Die Spannung kann die übliche KFZ-Bordspannung von 14 V sein, oder auch eine Spannung von beispielsweise 42 V oder 48 V. Es versteht sich, dass die Spannung auch eine übliche Netzspannung von beispielsweise 110 V oder 220 V sein können, insbesondere bei Verwendung einer erfindungsgemäßen Verbundscheibe 10 in der Gebäudetechnik, wie einem transparenten Heizkörper. Der entsprechende Beheizungsgrad der Verbundscheibe 10 kann wiederum über die Beleuchtung der Glasfaser 4 durch das Leuchtmittel 20 angezeigt werden.

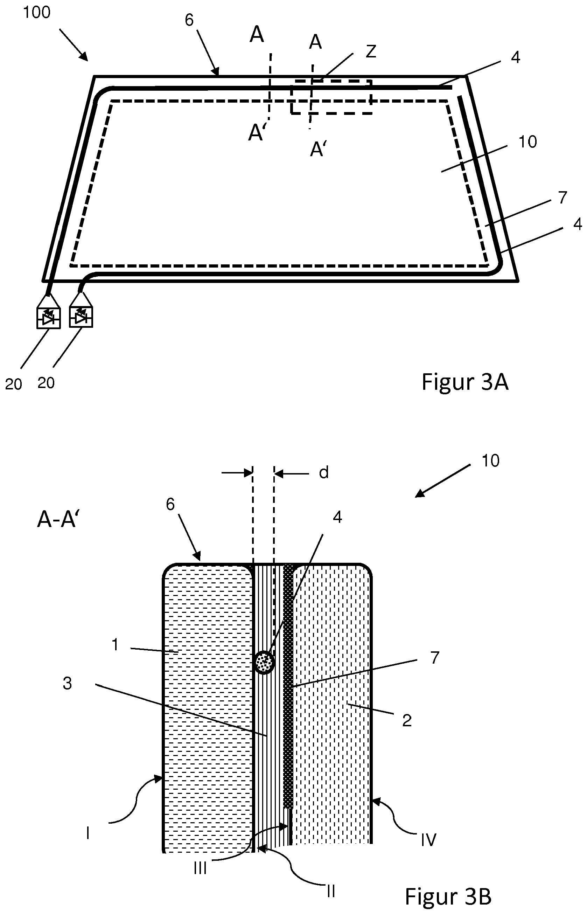

Figur 3A zeigt eine Draufsicht auf eine alternative erfindungsgemäße Verbundscheibenanordnung 100, die eine alternative erfindungsgemäße Verbundscheibe 10 und ein Leuchtmittel 20 umfasst. Figur 3B zeigt eine Querschnittsdarstellung entlang der Schnittlinie A-A' durch die Verbundscheibe 10 aus Figur 3A. Die Verbundscheibe 10 ist in diesem Beispiel als Windschutzscheibe eines Personenkraftwagens ausgestaltet.

Die erfindungsgemäße Verbundscheibe 10 enthält eine Außenscheibe 1 mit einer innenseitigen Oberfläche II, eine Innenscheibe 2 mit einer außenseitigen Oberfläche III und eine thermoplastische Zwischenschicht 3, welche die innenseitige Oberfläche II der Außenscheibe 1 mit der außenseitigen Oberfläche III der Innenscheibe 2 über die Scheibenfläche miteinander verbindet. Die Außenscheibe 1 und die Innenscheibe 2 bestehen beispielsweise aus Kalk-Natron-Glas und weisen beispielsweise eine Dicke von jeweils 2,1 mm auf. Die thermoplastische Zwischenschicht 3 ist beispielsweise eine Folie aus Polyvinylbutyral (PVB) mit einer Dicke von 0,76 mm. Es versteht sich, dass auch andere Glasscheiben oder Polymerscheiben als Außenscheibe 1 und Innenscheibe 2 verwendet werden können. Des Weiteren kann die Dicke der Außenscheibe 1 und Innenscheibe 2 an die jeweilige Verwendung angepasst sein.

In diesem Ausgestaltungsbeispiel sind zwischen der Außenscheibe 1 und der Innenscheibe 2 zwei lichtstreuende Glasfasern 4 angeordnet. Auch hier werden die Glasfasern 4 durch Öffnungen 15 der Zwischenschicht 3 hindurchgeführt.

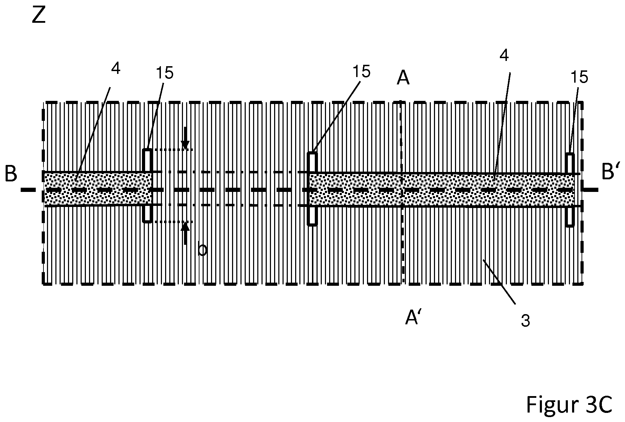

Figur 3C zeigt eine beispielhafte detaillierte Darstellung des Ausschnitts Z der Zwischenschicht 3 mit Glasfaser 4 des Ausschnitts Z aus Figur 3A. Die Öffnungen 15 sind hier beispielhaft als Schlitze quer zur Erstreckungsrichtung der Glasfaser 4 ausgebildet. Die Breite b der Schlitze beträgt beispielsweise 5 mm. Das weitere Herstellungsverfahrens ist beispielsweise in den Figuren 1D bis 1F und der dazugehörigen Beschreibung dargestellt.

Die lichtstreuende Glasfasern 4 haben einen Durchmesser d von jeweils 150 µm und sind dazu geeignet über ihre Seitenwand entlang ihrer Erstreckungslänge Licht auszusenden. Das Licht wird dabei über eine Stirnfläche der Glasfaser 4 in die Glasfaser 4 eingekoppelt. Dazu ist an einem Ende jeder Glasfaser 4 ein Leuchtmittel 20 angeordnet. Das Leuchtmittel 20 besteht beispielsweise aus einer Laserdiode, die beispielsweise über einen Reflektor, Licht in die Glasfaser 4 einkoppeln kann. Bei Anlegen einer Spannung an die Laserdiode wird dann Licht in die Glasfaser 4 eingekoppelt. Die Glasfaser 4 streut dann das Licht an ihrer Oberfläche entlang ihrer gesamten Erstreckungslänge, so dass die Glasfaser 4 über ihre gesamte Erstreckungslänge leuchtet.

Die Verbundscheibe 10 weist in diesem Beispiel auf einem umlaufenden Randbereich der außenseitigen Oberfläche III der Innenscheibe 2 einen opaken Abdeckdruck 7 auf, beispielsweise einen Schwarzdruck aus einer keramischen Farbe, die durch Einbrennen eine feste Verbindung mit der gläsernen Oberfläche III der Innenscheibe 2 eingeht. Der Abdeckdruck 7 hat die Aufgabe, die Durchsicht auf die Klebestellen zu verdecken, mit denen die Verbundscheibe 10 in eine Fahrzeugkarosserie eingeklebt ist. Gleichzeitig wird die Klebestelle vor Lichteinstrahlung und insbesondere vor der Einstrahlung von UV-Licht geschützt, die eine beschleunigte Alterung der Klebestelle bewirken würde.

Die Glasfasern 4 sind in diesem Beispiel rahmenförmig im Randbereich der Verbundscheibe 10 angeordnet. Der Abstand zur Seitenkante 6 beträgt beispielsweise 1 cm bis 20 cm.

Die Glasfasern 4 sind hier beispielsweise in einem Bereich angeordnet, der von der innenseitigen Oberfläche IV der Innenscheibe 2 durch den Abdeckdruck 7 verdeckt wird. Dies bedeutet, dass die Glasfasern 4 vom dem Fahrzeuginnenraum nicht gesehen werden können. Insbesondere gelangt auch an den Seitenwänden der Glasfasern 4 austretendes Licht nicht in den Fahrzeuginnenraum, so dass Innensassen dadurch nicht geblendet oder gestört werden können.

Das Leuchtmittel 20 ist hier beispielsweise eine leistungsstarke Laserdiode. Die mit dieser Verbundscheibe 10 hergestellte Verbundscheibenanordnung 100 ist beispielsweise derart konfiguriert, dass das Leuchtmittel 20 beim Verriegeln oder Entriegeln der Fahrzeugtüren für eine gewisse Zeitdauer von beispielsweise 1 min. die Glasfaser 4 beleuchtet. Dies kann unabhängig oder zeitgleich zur übrigen Fahrzeugbeleuchtung erfolgen. Eine derartige Beleuchtung kann von der Person, die die Verriegelung und Entriegelung, beispielsweise mittels eines Funkempfängers, als eindeutiges Signal dienen, dass das Fahrzeug sicher verriegelt oder entriegelt ist. Gleichzeit kann damit eine Coming-Home- oder eine Leaving-Home-Funktion realisiert werden.

Das Leuchtmittel 20 kann dabei einfarbig sein oder verschiedene Zustände durch verschiedene Farben kennzeichnen. Unterschiedliche Farben lassen dabei eine Verriegelung des Fahrzeugs von einer Entriegelung gut sichtbar unterscheiden. Wird die Beleuchtung der Glasfaser 4 als Warnfunktion verwendet, können beispielsweise eine rotes oder orangenes Leuchtmittel verwendet werde, da eine rote oder orange Farbe üblicherweise mit einer Gefahr assoziiert wird. Grüne Leuchtmittel sind bei Dunkelheit besonders gut zu erkennen, da das menschliche Auge eine besonders große Empfindlichkeit für das grüne Farbspektrum aufweist.

Es versteht sich, dass die Glasfaser 4 nicht oder nicht nur entlang einer Seitenkante einer Scheibe angeordnet sein muss, sondern beliebig angeordnet sein kann. Insbesondere können eine oder mehrere Glasfasern 4 in Form eines Symbols, beispielsweise eines Warndreiecks, angeordnet sein, oder einen Schriftzug bilden.

Es versteht sich weiterhin, dass die Glasfaser 4 Bereiche aufweisen kann, in denen kein Licht über die Seitenwände der Glasfaser 4 austritt, so dass voneinander unzusammenhängende Symbole beleuchtet werden können.

Es versteht sich weiterhin, dass in allen erfindungsgemäßen Ausgestaltungsbeispielen weitere, hier nicht dargestellte Zwischenschichten zwischen der Zwischenschicht 3 und einer der Scheiben 1,2 angeordnet sein können. Dies ist insbesondere von Vorteil, wenn die Zwischenschicht 3 keine klebenden Eigenschaften aufweist, beispielsweise eine PET-Folie, die über weitere Zwischenschichten, beispielsweise aus PVB-Folien mit den Scheiben 1,2 verklebt werden. Die Glasfaser 4 ist dann beispielsweise durch Öffnungen der Zwischenschicht 3 oder anderer Zwischenschichten geführt.

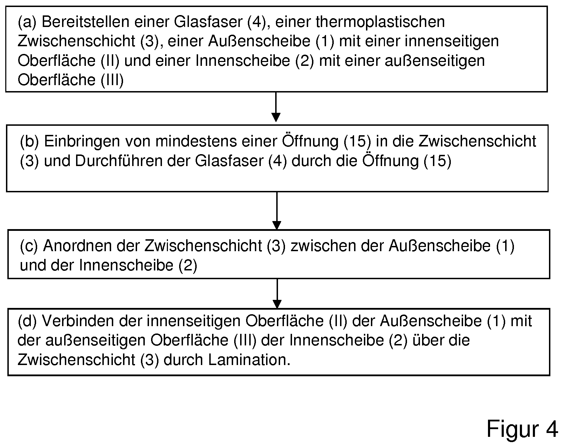

Figur 4 zeigt ein Flussdiagramm eines Ausführungsbeispiels des erfindungsgemäßen Verfahrens zur Herstellung einer erfindungsgemäßen Verbundscheibe 10. Das erfindungsgemäße Verfahren umfasst die folgenden Schritte:
(a) Bereitstellen einer Glasfaser 4, einer thermoplastischen Zwischenschicht 3, einer Außenscheibe 1 mit einer innenseitigen Oberfläche II und einer Innenscheibe 2 mit einer außenseitigen Oberfläche III,
(b) Einbringen von mindestens einer Öffnung 15 in die Zwischenschicht 3 und Durchführen der Glasfaser 4 durch die Öffnung 15,
(c) Anordnen der Zwischenschicht 3 zwischen der Außenscheibe 1 und der Innenscheibe 2,
(d) Verbinden der innenseitigen Oberfläche II der Außenscheibe 1 mit der außenseitigen Oberfläche III der Innenscheibe 2 über die Zwischenschicht 3 durch Lamination.

### Bezugszeichenliste:

- 1: Außenscheibe
- 2: Innenscheibe
- 3: Zwischenschicht, thermoplastische Zwischenschicht
- 4: Glasfaser
- 6: Seitenkante
- 7: Abdeckdruck
- 10: Verbundscheibe
- 15: Öffnung
- 20: Leuchtmittel
- 100: Verbundscheibenanordnung

- b: Breite der Öffnung 15
- d: Durchmesser der lichtstreuenden Glasfaser 4
- A-A': Schnittlinie
- B-B': Schnittlinie
- P1, P2: Pfeil
- Z: Ausschnitt
- I: außenseitige Oberfläche der Außenscheibe 1
- II: innenseitige Oberfläche der Außenscheibe 1
- III: außenseitige Oberfläche der Innenscheibe 2
- IV: innenseitige Oberfläche der Innenscheibe 2

## Patentansprüche

1. Verbundscheibe (10), mindestens umfassend:
- eine Außenscheibe (1) und eine Innenscheibe (2), welche über eine Zwischenschicht (3) miteinander verbunden sind, und
- mindestens eine lichtstreuende Glasfaser (4), die geeignet ist, Licht durch Streuung über ihre Seitenwand entlang ihrer Erstreckungslänge auszusenden, und aus mindestens einem Glasfaserkern besteht, der durch eine oder mehrere mantelförmig um den Glasfaserkern angeordnete Schichten, die eine Vielzahl von Streuzentren in Form von Nanoporen oder Nanopartikeln aufweisen, umgeben ist,
wobei die Glasfaser (4) abschnittsweise zwischen der Zwischenschicht (3) und der Außenscheibe (1) und zwischen der Zwischenschicht (3) und der Innenscheibe (2) angeordnet ist und durch mindestens eine Öffnung (15) der Zwischenschicht (3) geführt ist.

2. Verbundscheibe (10) nach Anspruch 1, wobei die Glasfaser (4) in eine Oberfläche der Zwischenschicht (3) eingebettet ist.

3. Verbundscheibe (10) nach Anspruch 1 und 2, wobei die Öffnung (15) eine kreisförmige, ellipsenförmige, rechteckige oder dreieckige Ausnehmung, eine Ausstanzung oder ein Schlitz, bevorzugt ein Längsschlitz oder ein Querschlitz, ist.

4. Verbundscheibe (10) nach einem der Ansprüche 1 bis 3, wobei die Breite b der Öffnung (15) quer zur Erstreckungsrichtung der Glasfaser (4) von einem einfachen Durchmesser d der Glasfaser (4) bis zu einem 40-fachen Durchmesser d beträgt.

5. Verbundscheibe (10) nach einem der Ansprüche 1 bis 3, wobei die Breite b der Öffnung (15) quer zur Erstreckungsrichtung der Glasfaser (4) von 0,5 mm bis 10 mm, bevorzugt von 1 mm bis 5 mm, beträgt.

6. Verbundscheibe (10) nach einem der Ansprüche 1 bis 5, wobei die Glasfaser (4) durch mindestens 2, bevorzugt durch 3 bis 100 Öffnungen (15) geführt ist.

7. Verbundscheibe (10) nach einem der Ansprüche 1 bis 6, wobei der Abstand benachbarter Öffnungen (15) von 0,5 cm bis 50 cm, bevorzugt von 0,5 cm bis 20 cm, besonders bevorzugt von 0,5 cm bis 5 cm und insbesondere von 1 cm bis 3 cm beträgt.

8. Verbundscheibenanordnung (100), umfassend:
- eine Verbundscheibe (10) nach einem der Ansprüche 1 bis 7 und
- ein Leuchtmittel (20) zur Einkopplung von Licht in die Glasfaser (4).

9. Verbundscheibenanordnung (100) nach Anspruch 8, wobei das Leuchtmittel (20) mindestens eine Laserdiode oder mindestens eine Leuchtdiode enthält.

10. Verfahren zur Herstellung einer Verbundscheibe (10) nach einem der Ansprüche 1 bis 7, mindestens umfassend:
(a) Bereitstellen einer Glasfaser (4), einer thermoplastischen Zwischenschicht (3), einer Außenscheibe (1) mit einer innenseitigen Oberfläche (II) und einer Innenscheibe (2) mit einer außenseitigen Oberfläche (III),
(b) Einbringen von mindestens einer Öffnung (15) in die Zwischenschicht (3) und Durchführen der Glasfaser (4) durch die Öffnung (15),
(c) Anordnen der Zwischenschicht (3) zwischen der Außenscheibe (1) und der Innenscheibe (2),
(d) Verbinden der innenseitigen Oberfläche (II) der Außenscheibe (1) mit der außenseitigen Oberfläche (III) der Innenscheibe (2) über die Zwischenschicht (3) durch Lamination.

11. Verfahren nach Anspruch 10, wobei im Schritt (b) die Öffnung (15) ausgestanzt wird, bevorzugt mittels einer Nadel oder einem Locheisen.

12. Verfahren nach Anspruch 10, wobei im Schritt (b) die Öffnung (15) durch Einschneiden der Zwischenschicht (3), bevorzugt mit einem Skalpell, einer Klinge, einem Messer oder einem Laser, hergestellt wird.

13. Verfahren einem der Ansprüche 10 bis 12, wobei im Schritt (b) eine Öffnung (15) mit einer Breite b quer zur Erstreckungsrichtung der Glasfaser (4) von 0,5 mm bis 10 mm, bevorzugt von 1 mm bis 5 mm, eingebracht wird.

14. Verwendung der Verbundscheibe (10) nach einem der Ansprüche 1 bis 7 oder der Verbundscheibenanordnung (100) nach Anspruch 8 oder 9 in Fortbewegungsmitteln für den Verkehr auf dem Lande, in der Luft oder zu Wasser, insbesondere in Zügen, Schiffen und Kraftfahrzeugen beispielsweise als Windschutzscheibe, Heckscheibe, Seitenscheibe und/oder Dachscheibe, in Gebäuden, insbesondere im Zugangsbereich, Fensterbereich, Dachbereich oder Fassadenbereich, als Einbauteil in Möbeln und Geräten.

## Claims

1. Composite pane (10), at least comprising:
- an outer pane (1) and an inner pane (2), which are bonded to one another via an intermediate layer (3), and
- at least one light-diffusing glass fiber (4), which is suitable for emitting light, by diffusion, through the side wall of said fiber along its extension length, and which consists of at least one glass fiber core surrounded by one or more layers that are arranged in the form of a shell around the glass fiber core and that have a plurality of diffusion centers in the form of nanopores or nanoparticles,
wherein the glass fiber (4) is arranged in portions between the intermediate layer (3) and the outer pane (1) and between the intermediate layer (3) and the inner pane (2) and extends through at least one opening (15) in the intermediate layer (3).

2. Composite pane (10) according to claim 1, wherein the glass fiber (4) is embedded in a surface of the intermediate layer (3).

3. Composite pane (10) according to claim 1 and 2, wherein the opening (15) is a circular, elliptical, rectangular or triangular cut-out, a punched-out portion or a slot, preferably a longitudinal slot or a transverse slot.

4. Composite pane (10) according to any of claims 1 to 3, wherein the width b of the opening (15) transverse to the direction of extension of the glass fiber (4) is from a single diameter d of the glass fiber (4) to 40 times diameter d.

5. Composite pane (10) according to any of claims 1 to 3, wherein the width b of the opening (15) transverse to the direction of extension of the glass fiber (4) is from 0.5 mm to 10 mm, preferably from 1 mm to 5 mm.

6. Composite pane (10) according to any of claims 1 to 5, wherein the glass fiber (4) extends through at least 2, preferably through 3 to 100 openings (15).

7. Composite pane (10) according to any of claims 1 to 6, wherein the distance between adjacent openings (15) is from 0.5 cm to 50 cm, preferably from 0.5 cm to 20 cm, particularly preferably from 0.5 cm to 5 cm, and in particular from 1 cm to 3 cm.

8. Composite pane assembly (100) comprising:
- a composite pane (10) according to any of claims 1 to 7, and
- a lighting means (20) for coupling light into the glass fiber (4).

9. Composite pane assembly (100) according to claim 8, wherein the lighting means (20) contains at least one laser diode or at least one light emitting diode.

10. Method for producing a composite pane (10) according to any of claims 1 to 7, at least comprising:
(a) providing a glass fiber (4), a thermoplastic intermediate layer (3), an outer pane (1) having an inner surface (II), and an inner pane (2) having an outer surface (III),
(b) introducing at least one opening (15) into the intermediate layer (3) and guiding the glass fiber (4) through the opening (15),
(c) arranging the intermediate layer (3) between the outer pane (1) and the inner pane (2),
(d) bonding the inner surface (II) of the outer pane (1) to the outer surface (III) of the inner pane (2) via the intermediate layer (3) by lamination.

11. Method according to claim 10, wherein in step (b) the opening (15) is punched out, preferably by means of a needle or a hollow punch.

12. Method according to claim 10, wherein in step (b) the opening (15) is produced by cutting the intermediate layer (3), preferably using a scalpel, a blade, a knife or a laser.

13. Method according to any of claims 10 to 12, wherein in step (b) an opening (15) is introduced that has a width b transverse to the direction of extension of the glass fiber (4) of from 0.5 mm to 10 mm, preferably from 1 mm to 5 mm.

14. Use of the composite pane (10) according to any of claims 1 to 7 or of the composite pane assembly (100) according to claim 8 or 9 in means of transport for traffic on land, in the air or in water, in particular in trains, ships and motor vehicles, for example as a windshield, rear window, side window and/or roof window, in buildings, in particular in the entrance area, window area, roof area or facade area, as a built-in part in furniture and devices.

## Revendications

1. Vitrage feuilleté (10), comprenant au moins :
- une vitre externe (1) et une vitre interne (2), lesquelles sont reliées entre elles par l'intermédiaire d'une couche intermédiaire (3), et
- au moins une fibre de verre (4) diffusant la lumière, laquelle fibre de verre est adaptée pour émettre de la lumière par diffusion par l'intermédiaire de sa paroi latérale le long de sa longueur d'extension et est constituée d'au moins un noyau de fibre de verre, lequel est entouré par une ou plusieurs couches en forme de gaine disposées autour du noyau de fibre de verre, lesquelles couches présentent une pluralité de centres de diffusion sous forme de nanopores ou de nanoparticules,
dans laquelle la fibre de verre (4) est disposée, dans certaines régions, entre la couche intermédiaire (3) et la vitre externe (1) et entre la couche intermédiaire (3) et la vitre interne (2) et est guidée à travers au moins une ouverture (15) de la couche intermédiaire (3).

2. Vitrage feuilleté (10) selon la revendication 1, dans laquelle la fibre de verre (4) est incorporée dans une surface de la couche intermédiaire (3).

3. Vitrage feuilleté (10) selon les revendications 1 et 2, dans laquelle l'ouverture (15) est un évidement circulaire, ellipsoïdal, rectangulaire ou triangulaire, une découpe ou une fente, de préférence une fente longitudinale ou une fente transversale.

4. Vitrage feuilleté (10) selon l'une des revendications 1 à 3, dans laquelle la largeur b de l'ouverture (15), transversalement à la direction d'extension de la fibre de verre (4), est d'une fois le diamètre d de la fibre de verre (4) à 40 fois le diamètre d.

5. Vitrage feuilleté (10) selon l'une des revendications 1 à 3, dans laquelle la largeur b de l'ouverture (15), transversalement à la direction d'extension de la fibre de verre (4), est de 0,5 mm à 10 mm, de préférence de 1 mm à 5 mm.

6. Vitrage feuilleté (10) selon l'une des revendications 1 à 5, dans laquelle la fibre de verre (4) est guidée à travers au moins 2 ouvertures, de préférence à travers 3 à 100 ouvertures (15).

7. Vitrage feuilleté (10) selon l'une des revendications 1 à 6, dans laquelle la distance entre des ouvertures (15) adjacentes est de 0,5 cm à 50 cm, de préférence de 0,5 cm à 20 cm, de manière particulièrement préférée de 0,5 cm à 5 cm et en particulier de 1 cm à 3 cm.

8. Agencement de vitrage feuilleté (100), comprenant :
- un vitrage feuilleté (10) selon l'une des revendications 1 à 7 et
- un moyen lumineux (20) pour le couplage de lumière dans la fibre de verre (4).

9. Agencement de vitrage feuilleté (100) selon la revendication 8, dans lequel le moyen lumineux (20) contient au moins une diode laser ou au moins une diode électroluminescente.

10. Procédé de fabrication d'une vitrage feuilleté (10) selon l'une des revendications 1 à 7, comprenant au moins :
(a) la fourniture d'une fibre de verre (4), d'une couche intermédiaire (3) thermoplastique, d'une vitre externe (1) comportant une surface côté interne (II) et d'une vitre interne (2) comportant une surface côté externe (III),
(b) l'introduction d'au moins une ouverture (15) dans la couche intermédiaire (3) et le passage de la fibre de verre (4) à travers l'ouverture (15),
(c) la disposition de la couche intermédiaire (3) entre la vitre externe (1) et la vitre interne (2),
(d) la liaison par stratification de la surface côté interne (II) de la vitre externe (1) à la surface côté externe (III) de la vitre interne (2) par l'intermédiaire de la couche intermédiaire (3).

11. Procédé selon la revendication 10, dans lequel, à l'étape (b), l'ouverture (15) est découpée, de préférence au moyen d'une aiguille ou d'un poinçon.

12. Procédé selon la revendication 10, dans lequel, à l'étape (b), l'ouverture (15) est fabriquée en entaillant la couche intermédiaire (3), de préférence avec un scalpel, une lame, un couteau ou un laser.

13. Procédé selon l'une des revendications 10 à 12, dans lequel, à l'étape (b), une ouverture (15) comportant une largeur b, transversalement à la direction d'extension de la fibre de verre (4), de 0,5 mm à 10 mm, de préférence de 1 mm à 5 mm, est introduite.

14. Utilisation du vitrage feuilleté (10) selon l'une des revendications 1 à 7 ou de l'agencement de vitrage feuilleté (100) selon la revendication 8 ou 9 dans des moyens de déplacement pour la circulation terrestre, aérienne ou maritime, en particulier dans des trains, bateaux et véhicules automobiles, par exemple en tant que pare-brise, lunette arrière, vitre latérale et/ou vitre de toit, dans des bâtiments, en particulier dans la zone d'accès, zone des fenêtres, zone du toit ou zone des façades, en tant qu'élément incorporé dans des meubles et appareils.
